# EUROPEAN PATENT SPECIFICATION

(11) **EP 2 936 067 B1**
(45) Date of publication and mention of the grant of the patent: **19.12.2018**
(21) Application number: 13824442.1
(22) Date of filing: 23.12.2013
(51) Int. Cl.: G01C 22/00

(54) **METHOD AND SYSTEM FOR PATTERNING ELEMENTS HAVING TWO STATES**
VERFAHREN UND SYSTEM ZUR STRUKTURIERUNG VON ELEMENTEN MIT ZWEI ZUSTÄNDEN
PROCÉDÉ ET SYSTÈME POUR METTRE SOUS FORME DE MOTIFS DES ÉLÉMENTS AYANT DEUX ÉTATS

(30) Priority: 21.12.2012 US 201261740902 P
(43) Date of publication of application: 28.10.2015
(73) Proprietor: Glow Motion Technologies, LLC, Glendale, California 91201 (US)
(72) Inventor: BAILEY, Peter James, Cannock Staffs WS11 7LB (GB); PROBERT, Colin, Stafford Staffordshire ST17 0DH (GB); SLEZINGER, Daniel, Glendale, California 91201 (US); MURPHY, Mason, Glendale, California 91201 (US); RODDICK, Justin, Glendale, California 91201 (US); BLAIR, Scott, Glendale, California 91201 (US); OSTYN, Claude, B-8310 Brugge (BE); HOCHMAN, Jeremy, Glendale, California 91201 (US)
(74) Representative: Sawodny, Michael-Wolfgang
(86) International application number: PCT/US2013/077620
(87) International publication number: WO 2014/100832

(56) References cited:
- US-A1- 2003 017 823
- US-A1- 2009 125 429
- US-A1- 2009 289 844
- US-A1- 2012 165 100
- US-A1- 2012 249 797

## Description

### CROSS-REFERENCE TO RELATED APPLICATIONS

This international application claims the benefit of U.S. Provisional patent application number 61/740,902, entitled "METHOD AND SYSTEM FOR LIGHT PATTERNING", filed December 21, 2012.

### Background

### 1. Field

This invention relates to the electrical arts. More particularly, it relates to a method and system for forming patterns from a plurality of elements having two states.

### 2. Background

It is common for participants or attendees of organized events, such as music concerts or sporting events, to wave cigarette lighters, mobile phones, or chemically activated glow sticks in the air at the events to create an aesthetically pleasing illumination of the crowd area, and to feel more entwined with the overall performance. However, the operator of the venue has little, if any, control over such illumination, and such illumination cannot be tied in any way to the performance at the organized event.

Attendees of such organized events have also historically had to carry with them a separate ticket, whether paper or electronic, to gain access to the event. This usually includes having to carry a wallet to identify oneself, as well as to pay for items at the event.

Thus, there is a need in the art for systems and methods for providing controlled illumination or patterns at a venue or other location, as well as systems and methods that can provide a single device for access or entry into a venue, as well as participation within the venue after access has been gained

Patent documents US2003/017823 A1 and US2012/165100 A1 disclose a solution where users attending a venue with a mobile terminal register prior to the show or when in the show with their unique identifier and their location within the venue. A central controller takes the information into account in order to create sensory patterns (e.g. lightning patterns) in the venue by controlling a sensory element of the registered terminal.

### SUMMARY

The invention is defined with a system according to claim 1 and a method according to claim 8.

Further detailed embodiments are defined in the dependent claims.

### BRIEF DESCRIPTION OF THE DRAWINGS

The accompanying drawings, which are incorporated in and constitute a part of this specification, illustrate embodiments and together with the description, serve to explain the principles of the methods and systems:
Fig. 1 is a flowchart illustrating a method of registering and validating a transportable node for use at a venue.
Fig. 2 is a schematic illustration of a patterning system, according to one embodiment.
FIG. 3 is a block diagram illustrating a computing environment, according to one embodiment.
FIG. 4 is a block diagram illustrating a controller, according to one embodiment.
FIG. 5 is a block diagram illustrating a fixed node, according to one embodiment.
FIG. 6 is a block diagram illustrating a transportable node, according to one embodiment.
FIG. 7 is a perspective view of a transportable node, incorporated in the form of a stick, according to one embodiment.
FIG. 8 is an illustration of a byte message structure for a signal sequence, according to one embodiment.
FIG. 9 is a schematic illustration of seeding of a wave or ripple pattern using transportable nodes, according to one embodiment.
FIG. 10 illustrates an LED profile which allows control over the light element within a transportable node.

### DETAILED DESCRIPTION

Before the present methods and systems are disclosed and described, it is to be understood that the methods and systems are not limited to specific methods, specific components, or to particular configurations. It is also to be understood that the terminology used herein is for the purpose of describing particular embodiments only and is not intended to be limiting.

As used in the specification and the appended claims, the singular forms "a," "an" and "the" include plural referents unless the context clearly dictates otherwise. Ranges may be expressed herein as from "about" one particular value, and/or to "about" another particular value. When such a range is expressed, another embodiment includes from the one particular value and/or to the other particular value. Similarly, when values are expressed as approximations, by use of the antecedent "about," it will be understood that the particular value forms another embodiment. It will be further understood that the endpoints of each of the ranges are significant both in relation to the other endpoint, and independently of the other endpoint.

"Optional" or "optionally" means that the subsequently described event or circumstance may or may not occur, and that the description includes instances where said event or circumstance occurs and instances where it does not.

Throughout the description and claims of this specification, the word "comprise" and variations of the word, such as "comprising" and "comprises," means "including but not limited to," and is not intended to exclude, for example, other additives, components, integers or steps. "Exemplary" means "an example of and is not intended to convey an indication of a preferred or ideal embodiment."Such as" is not used in a restrictive sense, but for explanatory purposes.

Disclosed are components that can be used to perform the disclosed methods and systems. These and other components are disclosed herein, and it is understood that when combinations, subsets, interactions, groups, etc. of these components are disclosed that while specific reference of each various individual and collective combinations and permutation of these may not be explicitly disclosed, each is specifically contemplated and described herein, for all methods and systems. This applies to all aspects of this application including, but not limited to, steps in disclosed methods. Thus, if there are a variety of additional steps that can be performed it is understood that each of these additional steps can be performed with any specific embodiment or combination of embodiments of the disclosed methods.

The present methods and systems may be understood more readily by reference to the following detailed description of preferred embodiments and the Examples included therein and to the Figures and their previous and following description.

As will be appreciated by one skilled in the art, the methods and systems may take the form of an entirely hardware embodiment, an entirely software embodiment, or an embodiment combining software and hardware aspects. Furthermore, the methods and systems may take the form of a computer program product on a computer-readable storage medium having computer-readable program instructions (e.g., computer software) embodied in the storage medium. More particularly, the present methods and systems may take the form of web-implemented computer software. Any suitable computer-readable storage medium may be utilized including hard disks, CD-ROMs, optical storage devices, or magnetic storage devices.

Various patterning systems and methods will be described further herein. Various components and steps of these systems and methods are as described in U.K. Patent Application No. 0615664.0, filed on August 8, 2006, and published as GB 2 440 784.

It is distinct advantage of the inventive system that it can produce a pattern in a wide variety of locations. Representative locations include, with limitations, venues, such as stadiums, race tracks, auditoriums, arenas, amphitheatres, concert halls, theatres, casinos, factories, retail stores, convention centers, dance clubs, night clubs, conference rooms, amusement parks, parade routes and the like.

In some aspects of the invention, the patterning system includes a plurality of transportable nodes, each transportable node including an element having at least two states, where a suitable element command signal can bring one or more elements of the one or more activated transportable nodes into one of the its states.

It is a distinct advantage of the inventive patterning system that it is useful with a wide variety of elements. In one aspect, the element is a sensory element. Representative sensory elements include without limitation, a light element, an audio element, a tactile element or combinations thereof. And in some embodiments, the sensory element is a light element comprising at least one LED. And in some embodiments, the transportable nodes include a plurality of red, green, blue and white LEDs, a plurality of RGB + W LEDs or a plurality of RGBW LEDs. And is some aspects, the sensory element varies the intensity of at least one of the states in response to the pixilated signal.

In is another distinct advantage that the inventive patterning system can form a variety of different patterns. For example, as will be discussed further herein below, each transportable node can form a part of an overall pattern, such as a sensory pattern, including a light pattern. For example, an attendee of a concert at a venue or other location can wear or carry the transportable node and become an active participant in a performance at the venue by becoming part of a pattern to be displayed at the venue.

In one aspect, the patterning system can further comprise a database configured to store the unique identifiers of the plurality of transportable nodes. For example, in some aspects, the database can store unique identifiers corresponding to ticket holders or spectators at a venue, as well as guests, attendees, patients or residents at other locations.

And in one aspect, the patterning system can further comprise a transmitter configured to send a query command to one or more of the plurality of transportable nodes, and further configured to receive the respective unique identifier of the one or more transportable nodes. The transmitter can be further configured to validate the unique identifier against the database and activate the validated transportable node to receive the element command signal. A different network identifier can be issued to each venue, such that the transportable nodes will be specific to a venue. In other embodiments, a transportable node can be configured to be used at any venue at any time. For example, a special network identifier can be assigned to a transportable node to allow the node to be used at any venue, such that it will respond to any transmitter or controller (described further herein).

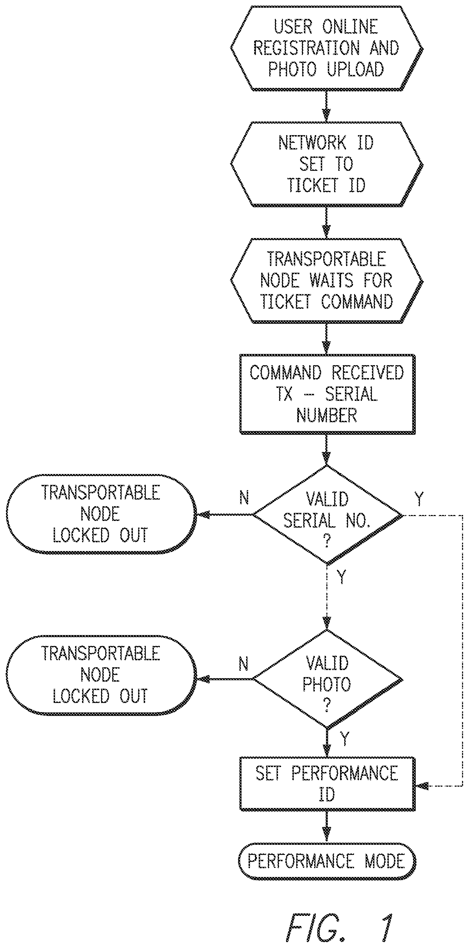

According to further embodiments, the transportable nodes can be issued to users prior to arriving at a venue or other location. In this way, each transportable node can be registered and then used as an electronic ticket or electronic means for gaining entry to the venue or other location, such as shown in FIG. 1. The network identifier of the transportable node can be set to a default ticket protocol address and channel before being delivered to the user. A website can be provided to a user that allows the user to register his transportable node in a way that links the unique identifier (such as the serial number) of the transportable node with the venue or other location for a specific date and/or time. For example, if the user plans to attend a concert at a venue, the website would allow the user to register the transportable node for use at the concert. The database can be configured to store all unique identifiers of all transportable nodes, and can also be configured to store the unique identifiers of transportable nodes that have been registered for a particular venue or other location.

Upon arriving at the venue or other location, the user can present the transportable node for validation. Thus, as described above, a transmitter can send a query command to the transportable node and receive the unique identifier of the transportable node in response. The transmitter can then validate the unique identifier against the database to determine if the transportable node has been registered for use at the venue or other location for the specific day/time or for a specific event. In one embodiment, all ticketing messaging between the ticket transmitter and the transportable node can be encrypted, such as, but not limited to, using AES128 encryption.

In yet a further embodiment, upon registering the transportable node on the website, the user can upload a picture of him that is linked to the registration. Upon arrival at the venue, the transmitter can display the picture so that the identity of the holder of the transportable node can be verified against the registration picture. Once the transportable node has been validated, it can be activated for use at the venue or other location. In one embodiment, the transmitter can communicate the validated transportable node's network identifier and default channel to the controller. The transportable node is then, in effect, in performance mode to allow it to be used at the venue to be part of the pattern discussed herein. If the transportable node is not validated (for example, if the serial number was not registered, or if the registered picture does not match the identity of the holder of the transportable node), then the transportable node can be locked out or shutdown so that it cannot be used at the venue. As can be appreciated, if the transportable node is used as an electronic ticket, the user would be denied entry to the venue in this example.

Each transportable node can act as a discrete part of the overall pattern. As such, coordinated patterns can be created and controlled at venues or other locations, such as during organized events like music concerts or sporting events. The transportable nodes can take the form of transportable wands, badges, sticks, necklaces, wristbands, bracelets, footwear or other such portable or wearable devices. In some aspects, the nodes are communication devices, such a smart phones, smart watches, smart glasses and the like. As discussed above, in some embodiments, each transportable node can comprise a light element, such as one or more LEDs. And in some embodiments, each transportable node can include an array of LEDs in red, green, and blue, for example.

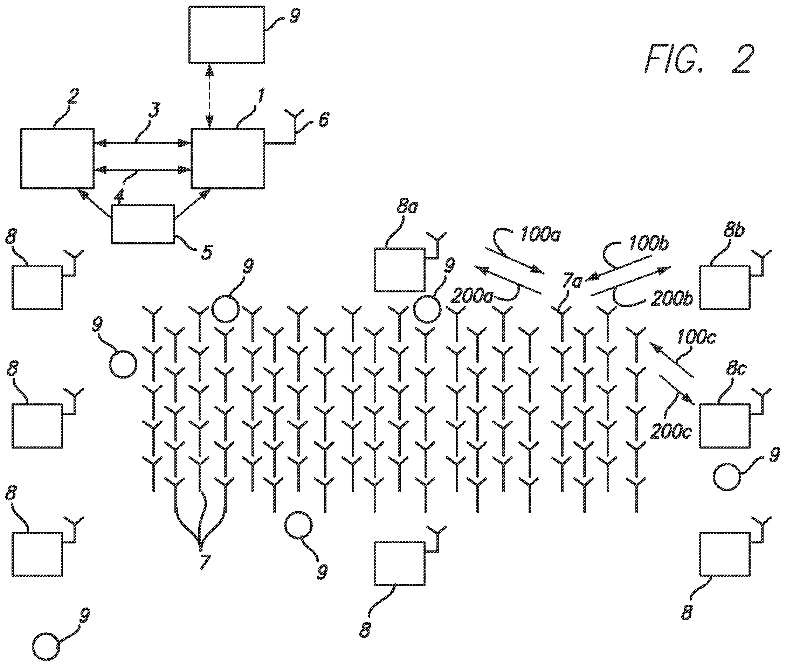

The plurality of transportable nodes 7 can be controlled by the controller 1. With reference to FIG. 2, the controller 1 is coupled to a processor 2 in order to receive operational demands 3 and responses 4 from the transportable nodes 7. The controller can also be coupled to the transmitter 9, as described above, to receive the network identifiers and/or default channels of the validated transportable nodes.

In one aspect, the controller 1 can also include an extrinsic control 5, such as in the form of audio inputs or a control device for a state-based protocol controller, including without limitation a DMX controller, that are coupled to the processor 2 or directly to the controller 1 in order to alter the element command signal sent from the controller. For example, the controller can be configured to send a pre-determined element command signal. Optionally, the element command signal can be altered depending on the audio input received through the audio inputs 5. In this embodiment, certain sounds or frequencies can affect the element command signal, thereby causing a different pattern to be displayed by the transportable nodes 7. For example, at a music concert, certain sounds (by volume, by frequency, etc.) or series of sounds can cause certain patterns to be displayed. Similarly, at sporting events, certain sounds or series of sounds (such as calls by referees, cheers of a crowd, etc.) can cause certain patterns to be displayed. In another aspect, the controller 1 incorporated into a state-based protocol controller, including without limitation a DMX controller.

In various embodiments, the patterning system further comprises one or more fixed nodes 8 configured to identify transportable nodes within radio range of the fixed node and to assess the signal strength of the transportable nodes 7. The processor 2 can be configured to determine the relative position of each of the transportable nodes based upon the identification of the transportable nodes by the fixed nodes. As shown in FIG. 2, the fixed nodes 8 can be spatially distributed about the venue and secured in fixed positions, such that the position of each fixed node is known by the processor. The relative positions of the transportable nodes 7 in relation to each fixed node can then be determined.

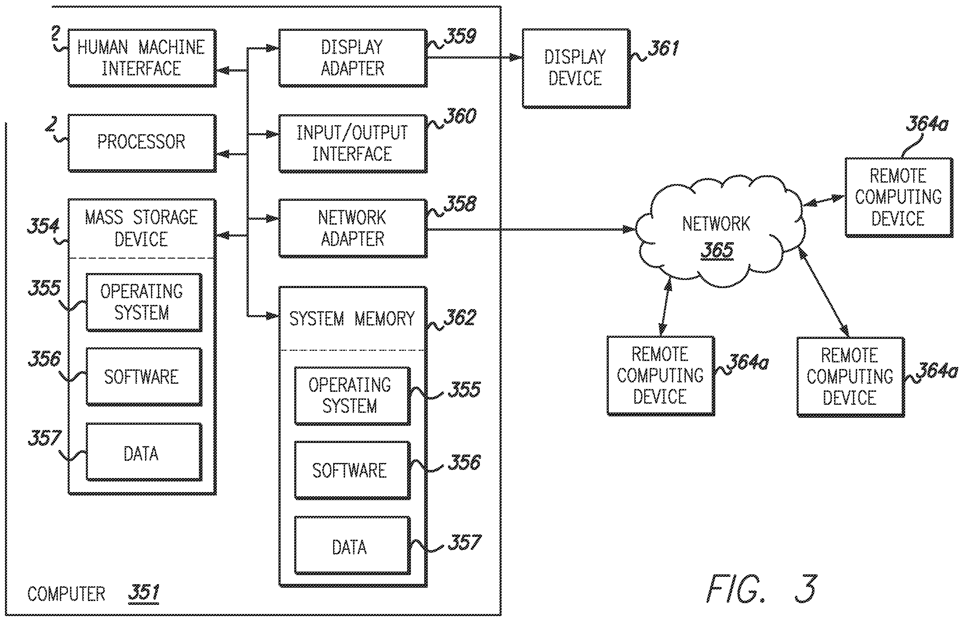

As shown in FIG. 3, the processor 2 can be part of a general-purpose computing device in the form of a computer 351. Representative computers include, without limitation, towers, lap-tops, tablets, smart phones, smart watches and smart glasses. As is known in the art, the computer 351 can also comprise a system memory 362, and a system bus 363 that couples various system components including the processor to the system memory. The system bus represents one or more of several possible types of bus structures, including a memory bus or memory controller, a peripheral bus, an accelerated graphics port, and a processor or local bus using any of a variety of bus architectures. By way of example, such architectures can comprise an Industry Standard Architecture (ISA) bus, a Micro Channel Architecture (MCA) bus, an Enhanced ISA (EISA) bus, a Video Electronics Standards Association (VESA) local bus, an Accelerated Graphics Port (AGP) bus, and a Peripheral Component Interconnects (PCI), a PCI-Express bus, a Personal Computer Memory Card Industry Association (PCMCIA), Universal Serial Bus (USB) and the like. The bus 363, and all buses specified in this description can also be implemented over a wired or wireless network connection and each of the subsystems, including the processor 2, a mass storage device 354, an operating system 355, performance control software 356, data 357, a network adapter 358, system memory 362, an Input/Output Interface 360, a display adapter 359, a display device 361, and a human machine interface 352, can be contained within one or more remote computing devices at physically separate locations, connected through buses of this form, in effect implementing a fully distributed system.

The computer 351 typically comprises a variety of computer readable media. Exemplary readable media can be any available media that is accessible by the computer 351 and comprises, for example and not meant to be limiting, both volatile and non-volatile media, removable and non-removable media. The system memory 362 comprises computer readable media in the form of volatile memory, such as random access memory (RAM), and/or nonvolatile memory, such as read only memory (ROM). The system memory 362 typically contains data and/or program modules such as operating system 355 and performance control software 356 that are immediately accessible to and/or are presently operated on by the processor 2.

In another aspect, the computer 351 can also comprise other removable/non-removable, volatile/non-volatile computer storage media. By way of example, FIG. 3 illustrates a mass storage device 354 which can provide non-volatile storage of computer code, computer readable instructions, data structures, program modules, and other data for the computer 351. For example and not meant to be limiting, a mass storage device 354 can be a hard disk, a removable magnetic disk, a removable optical disk, magnetic cassettes or other magnetic storage devices, flash memory cards, CD-ROM, digital versatile disks (DVD) or other optical storage, random access memories (RAM), read only memories (ROM), electrically erasable programmable read-only memory (EEPROM), and the like.

Optionally, any number of program modules can be stored on the mass storage device 354, including by way of example, an operating system 355 and performance control software 356. Each of the operating system 355 and software 356 (or some combination thereof) can comprise elements of the programming and the software 356. Data 357 can also be stored on the mass storage device 354. Data 357 can be stored in any of one or more databases known in the art. Examples of such databases comprise, DB2®, Microsoft® Access, Microsoft® SQL Server, Oracle®, mySQL, PostgreSQL, and the like. The databases can be centralized or distributed across multiple systems.

In another aspect, the user can enter commands and information into the computer 351 via an input device (not shown). Examples of such input devices comprise, but are not limited to, a keyboard, pointing device (e.g., a "mouse"), a microphone, a joystick, a scanner, tactile input devices such as gloves, and other body coverings, and the like These and other input devices can be connected to the processing unit via a human machine interface that is coupled to the system bus, but can be connected by other interface and bus structures, such as a parallel port, game port, an IEEE 1394 Port (also known as a Firewire port), a serial port, or a universal serial bus (USB).

In yet another aspect, a display device 361 can also be connected to the system bus 363 via an interface, such as a display adapter 359. It is contemplated that the computer 351 can have more than one display adapter 359 and the computer 351 can have more than one display device 361. For example, a display device can be a monitor, an LCD (Liquid Crystal Display), or a projector. In addition to the display device 361, other output peripheral devices can comprise components such as speakers (not shown) and a printer (not shown) which can be connected to the computer 351 via Input/Output Interface 360. Any step and/or result of the methods can be output in any form to an output device. Such output can be any form of visual representation, including, but not limited to, textual, graphical, animation, audio, tactile, and the like.

The computer 351 can operate in a networked environment using logical connections to one or more remote computing devices 364a, b, and c. By way of example, a remote computing device can be a personal computer, portable computer, a server, a router, a network computer, a peer device or other common network node, and so on. In one aspect, the computer is a second processor that is part of a second patterning system at a second venue. In such aspects, multiple databases and multiple nodes ca be linked across different venues or other locations.

In another example, the remote computing devices can take the form of the fixed nodes 8 and/or transportable nodes 7 described herein. Logical connections between the computer 351 and a remote computing device 364a,b,c can be made via a local area network (LAN) and a general wide area network (WAN). Such network connections can be through a network adapter 358. A network adapter 358 can be implemented in both wired and wireless environments. Such networking environments are conventional and commonplace in offices, enterprise-wide computer networks, intranets, and the Internet 365.

For purposes of illustration, application programs and other executable program components such as the operating system 355 are illustrated herein as discrete blocks, although it is recognized that such programs and components reside at various times in different storage components of the computing device 351, and are executed by the data processor(s) of the computer. An implementation of performance control software 356 can be stored on or transmitted across some form of computer readable media. Any of the disclosed methods can be performed by computer readable instructions embodied on computer readable media. Computer readable media can be any available media that can be accessed by a computer. By way of example and not meant to be limiting, computer readable media can comprise "computer storage media" and "communications media." "Computer storage media" comprise volatile and nonvolatile, removable and non-removable media implemented in any methods or technology for storage of information such as computer readable instructions, data structures, program modules, or other data. Exemplary computer storage media comprises, but is not limited to, RAM, ROM, EEPROM, flash memory or other memory technology, CD-ROM, digital versatile disks (DVD) or other optical storage, magnetic cassettes, magnetic tape, magnetic disk storage or other magnetic storage devices, or any other medium which can be used to store the desired information and which can be accessed by a computer.

The methods and systems can employ Artificial Intelligence techniques such as machine learning and iterative learning. Examples of such techniques include, but are not limited to, expert systems, case based reasoning, Bayesian networks, behavior based AI, neural networks, fuzzy systems, evolutionary computation (e.g. genetic algorithms), swarm intelligence (e.g. ant algorithms), and hybrid intelligent systems (e.g. Expert inference rules generated through a neural network or production rules from statistical learning).

As described above, the processor can be coupled to the controller 1 in a number of different ways, including USB or other wired arrangements, or wireless arrangements such as Bluetooth. It can also be appreciated that the controller can include a processor directly, thereby eliminating the need for a separate computing device.

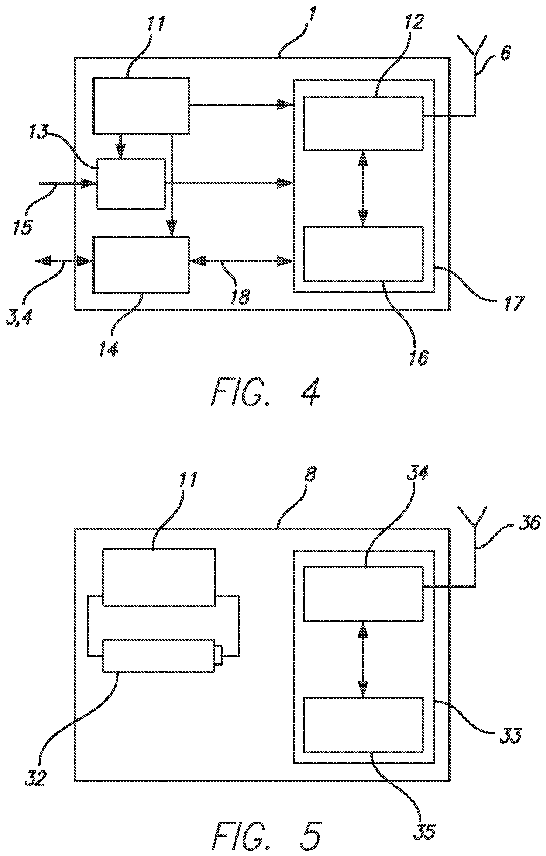

The controller generates an element command signal and sends it to the one or more fixed nodes 8 and/or transportable nodes 7 at the venue or other location, via the antenna 6 (or other wireless transmission means), as shown in FIG. 4. The controller can also include a power source 11, which provides electrical power to a transceiver 12. The controller can also include a filter 13 for audio or other extrinsic control signals 15. An interface 14 can act to receive a command as well as relay response signals 3, 4 to the processor. The controller can also include an integrated circuit 16 having the transceiver 12 as well as a microcontroller 17 for receiving and operating on signals 18. The transceiver 12 emits and receives signals through the antenna 6, as described herein, from the fixed nodes 8 and transportable nodes 7.

The controller 1 acts as the master within the patterning system, according to various embodiments. The controller receives commands from the processor and sends an element command signal through the antenna 6 to the nodes 7, 8; the controller can also receive signals from the nodes 7, 8. The signals received from the transportable nodes 7 and fixed nodes 8 can relate to simply notifying the processor that a node is available, or can relate to positional information for each transportable node 7 relative to the fixed nodes 8.

An exemplary fixed node 8 is illustrated in the block diagram of FIG. 5. As can be seen, each fixed node can include at least one of a power supply 11, a battery 32, an integrated circuit 33 having a microcontroller 35 a transceiver 34, and an antenna 36.

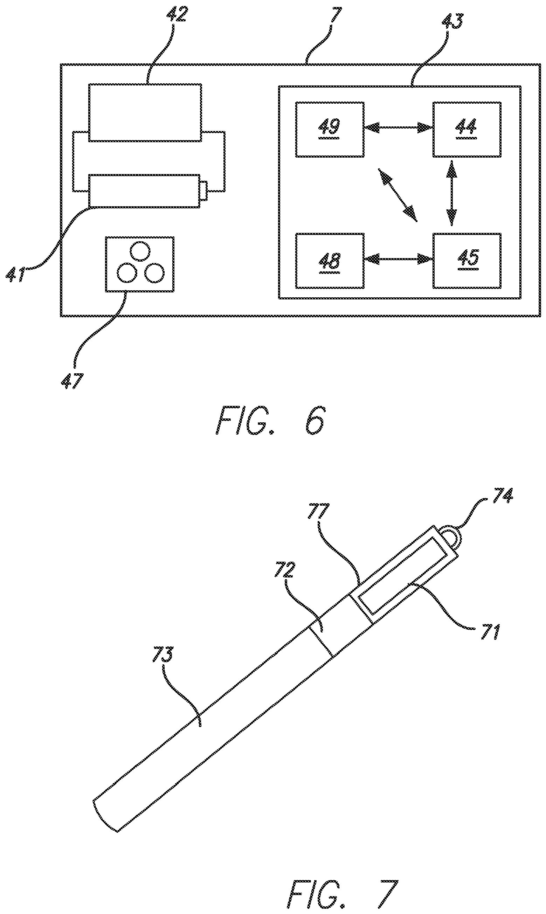

An exemplary transportable node 7 is illustrated in the block diagram of FIG. 6. Each transportable node can have a light element 47, such as, but not limited to, an array of LEDs. Each transportable node can also include at least one of a power supply 42 and a battery 41.

In some aspects, the transportable node includes a transceiver 44, and means for bringing the element into one of the states in response to the element command signal, such as a microcontroller 45. It can be appreciated that transceiver can comprise a transmitter and a receiver as separate components. In some embodiments, the transceiver is a radio frequency transceiver. Representative transceivers include, without limitation, ultrasonic wave transceivers, infrared light transceivers, visible light transceivers and the like. In the representative embodiment shown in FIG. 6, the transceiver 44 and microcontroller 45 are included on a single integrated circuit 43.

In some aspects, the transportable node additionally includes a memory 48. And as discussed further below, in some aspects, the transportable node additionally includes a sleep control module 49. In the representative embodiment shown in FIG. 6, the memory 48 and microcontroller 49 are included on the same integrated circuit 43 as contains the transceiver 44 and microcontroller 45.

In some aspects, the transportable node includes a microphone coupled to the microprocessor and, in some aspects, the transportable node includes an audio speaker coupled to the microprocessor. In some aspects, the transportable node includes an antenna 46. In some aspects, the antenna is a frequency adjustable antenna, such as a pixel addressable reconfigurable conformal ("PARCA") antenna. It can also be appreciated that, in some embodiments, the receiver and the antenna can be combined. The transceiver 44 receives the element command signal through the antenna 46, and this is communicated to the microcontroller 45 in order to illuminate or otherwise activate the element 47.

An exemplary transportable node, in the form of a stick 77, is shown in FIG. 7, which includes an illumination portion 73, an antenna 72, a handle end 71, and a hook 74 that allows the stick to be attached to a lanyard. As described above, the transportable node can be any of a variety of devices, including a wristband, wand, badge, necklace, etc.

According to various embodiments, a transportable node can include a tactile response mechanism within it (not shown), which could respond to the element command signal. For example, in a representative embodiment the tactile response mechanism can make the transportable node visible at the venue so that it can be used as part of the overall light pattern. Representative tactile response mechanisms can include vibrating mechanisms. If the transportable node is a wristband, the user could be alerted by the vibration to raise his hand in the air to make the wristband part of the overall pattern.

It is contemplated that each transportable node can have general on/off functionalities, or can remain in a sleep or standby mode at various times during its use. In one aspect, a 'SLEEP' message can be sent to the transportable node to cause the sleep control module 49 (FIG. 6) to place the transportable node into a low energy or "sleep" mode for a certain period of time (such as 5 minutes) on each channel from the controller. After the period of time has passed, the transportable node will go into 'on' mode and will check for an element command signal. If no element command signal is detected, the device will go back into the 'sleep' mode for the same period of time. If a signal is present, further instructions can be sent to the transportable node to stay in the 'on' mode or return to the sleep mode for the same or different period of time.

In one another aspect, the transportable nodes can be verified, validated, and activated by the transmitter. Upon entry into the venue, when each transportable node comes within range of the controller or a fixed node, it will automatically associate itself with the controller (or fixed node) and present its unique address to the controller to enable it to be incorporated within the desired lighting pattern. Thus, the transportable node will scan all available channels and will away a 'TIME TO PERFORMANCE' message on each channel from the controller. Once this message is received, and if the 'TIME TO PFRFORMANCE' is greater than a certain period of time (such as 5 minutes, in one example), the transportable node will go into sleep mode. After the period of time has passed, the transportable node will go into 'on' mode, and will start the channel scan again. If the 'TIME TO PERFORMANCE' is less than a certain period of time, the transportable node will remain on and will fix its channel to await the element command signal from the controller.

If an element command signal is not received within a certain period of time (such as 1 minute), then the transportable node will go into standby mode. When the element command signal is received, the microcontroller will switch on from a low power mode to activate the transportable node in response to the received element command signal. In other aspects, if no messages or signals are received by the transportable node within a certain period of time (such as 15 minutes), the transportable node will go into shutdown or 'off' mode and will require the user to turn it back on in order for it to be used as part of the pattern. Each of the time periods listed above is exemplary only, and can vary depending on the venue and the desired pattern (and timing of the same).

All active transportable nodes within the venue or other location can be utilized to create a desired pattern. The pattern can take a variety of forms, including general static shapes, dynamic shapes, dynamic ripples, wave effects, etc. The particular pattern is not intended to be limited to any particular pattern described herein. In operation, the element command signal comprises data indicative of the element, such as at least one of light color, light intensity, and light duration for a light element. The element command signal sent by the controller can either individually or globally (or a combination thereof) signal the transportable nodes to create the pattern at the venue or other location..

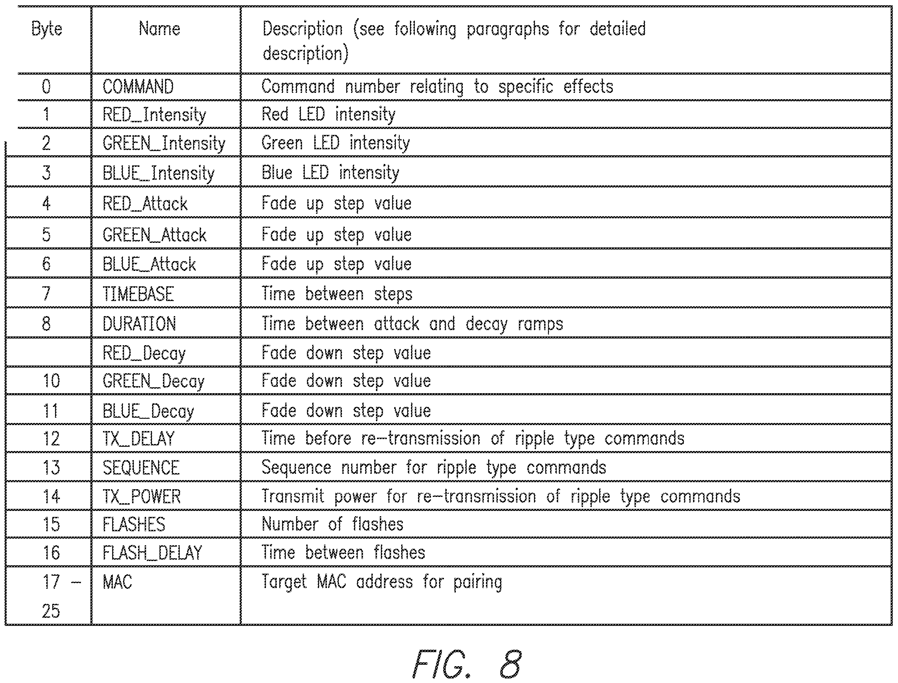

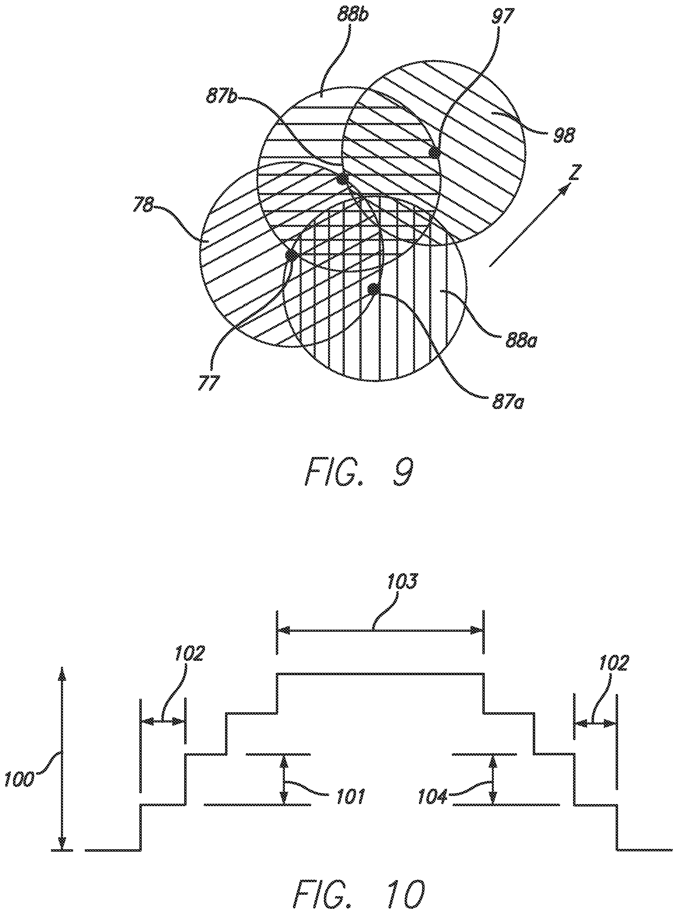

In one aspect, the message structure is arranged to control an LED illumination profile and provides a command structure to instruct the transportable nodes to perform specific actions. As shown in the illustrative table of FIG. 8 with reference numerals referring to FIG. 10), the message structure of the element command signal can include 25 bytes. Not all of these bytes are used in every element command signal.

Byte 0 COMMAND: The Command Byte shall give the possibility of 256 commands for the transportable node to execute.

Bytes 1-3 LED Intensity (100): The LED intensity value shall be in the range of 0x00 (LED is OFF) and OxFF (LED is at maximum intensity). Values in between shall vary the PWM o/p to each corresponding LED to vary the intensity.

Bytes 4-6 Attack (101): These bytes shall represent a step value to be used to ramp up the LED intensity to the desired value as defined in bytes 1-3. The time between steps is defined by the TIMEBASE byte in milliseconds. Each step will increment the LED intensity until it reaches the desired value as per bytes 1-3. If all three Attack bytes are zero then this signifies that only a decay ramp is required.

Byte 7 TIMEBASE (102): This byte is the time in milliseconds between Attack and Decay ramp steps (see FIG. 10).

Byte 8 DURATION (103): This byte is the time between the attack and decay ramps in IOs of milliseconds (10ms up to 2550ms). If this byte is cleared to zero then the duration will be infinite (until another command is received) and the decay ramp will not be performed and the Decay bytes 9-11 are ignored.

Bytes 9-11 Decay (104): These bytes shall represent a step value to be used to ramp down the LED intensity from the desired value as defined in bytes 1-3 down to zero. The time between steps is defined by the TIMEBASE byte in milliseconds. Each step will decrement the LED intensity until it reaches zero

Byte 12 Tx DELAY: This byte shall be the time between reception of a ripple type command and the re-transmission of that command. This byte shall represent a delay period of up to 2550mS for a hex value of OxFF. Therefore, Ox00=0mS, Ox01=10mS...0xFF=2550mS.

Byte 13 SEQUENCE: The Sequence number is used primarily in ripple type commands where a message is to be re-transmitted by each node that receives the command. The Sequence number will ensure that a ripple command is only re-transmitted once. Each bit of the Sequence byte represents a ripple command identifier with up to eight ripple command identities. Only one bit shall ever be set by the performance transmitter in the SEQUENCE byte at any one time. Each node shall store a local copy of the Sequence byte and shall set the corresponding bit according to the received Sequence byte. The node shall check its locally stored Sequence byte against the received Sequence bit. If the local bit is already set then this command has been received before and shall be ignored. Up to eight ripple commands can be in motion at once. The performance transmitter can send out a special "Clear Sequence Bits" command to all nodes reset the Sequence byte ready for another set of ripple commands.

Byte 14 TX POWER: This byte shall relate directly to the desired Transmit Power of the transportable node for the required action of the received command.

Byte 15 FLASHES: This byte defines the number of flashes to be performed. The Flash profile is defined by bytes 1-11.

Byte 16 FLASH DELAY: This byte is used in conjunction with byte 15 and is the time in IOs of milliseconds between each flash. (10mS - 2550mS)

Bytes 17-25 MAC: These bytes in the message structure shall contain a node MAC address.

All commands will be executed in a serial manner one after another and only a STOP command will override a command currently being executed.

As described above, in various embodiments, fixed nodes 8 can be used to identify transportable nodes 7 within radio range, and the processor 1 can determine the relative position of each transportable node 7. The number of fixed nodes 8 used can vary depending on the size of the pattern, and the processing and signaling capabilities of the components of the patterning system. The positioning capability not only enables the element command signal to vary depending on the position of the transportable node 7, but can also allow one or more transportable node 7 to be used to transmit element command signals to at least one other of the plurality of transportable nodes 7, such as seen in FIG. 9, which is discussed further herein below.

Positional information of transportable nodes 7 can be assessed by the fixed node 8 by scanning for transportable nodes 7 within its range, such as by sending positional signals 100 (and 100a,b,c) (see FIG. 1) to nearby transportable nodes 7. Nearby transportable nodes 7 will be stimulated by positional signals received from the fixed nodes 8 in order to respond with their address, along with a received signal strength indicator for that address (indicated by signal 200 in FIG. 1). The higher the received signal strength, the closer a transportable node 7 is to a fixed node 8. It is possible through triangulation of coordinated responses to a number of fixed nodes 8 to determine the relative position of each transportable node 7 within the field. Thus, the position of the transportable nodes within the field can be determined and set as element pattern reference positions.

Once the position of at least some of the transportable nodes 7 is known, it can be signaled (by the element command signal) to create the desired pattern. It can be appreciated that the element command signal can be sent directly from the controller 1 to the transportable nodes 7, or can be sent from the controller 1 to the fixed nodes 8, and then to the transportable nodes 7 or can be sent to one of more of the transportable nodes and then to other transportable nodes.

In one aspect, the fixed nodes 8 can act as a primary point for a pattern, such as a rippling wave. Thus, the fixed nodes 8 and transportable nodes 7 can generate and receive neighbor signals through a neighbor signal capability incorporated into the microcontrollers 35 and 45, respectively, of the nodes. The neighbor signal acts to identify other nodes (transportable or fixed) within a desired distance of a particular transportable or fixed node. Using such neighboring capabilities, zonal and local groups of nodes can be determined for incorporation into the global pattern as local pattern elements or zonal pattern elements.

It can be appreciated that using the controller 1 to address a large number of transportable nodes 7 directly may result in large time periods between each transportable node 7 being addressed. Thus, using tiered control through fixed nodes 8 and/or transportable nodes 7 to relay the element command signals to other fixed and/or transportable nodes may result in more efficient control of the nodes.

Furthermore, in some aspects, additional element control signals can be generated by a transportable node 7. For example, additional element control signals can be generated by the microprocessor 45 of a transportable node 7 in response to an element control signal received from the controller 1. In some aspects, the additional element control signal can be sent to a device 9 controllable by the element control signals, other than a transportable node. Representative controllable devices include televisions, video monitors, audio devices, lighting devices, such as luminaires and dimmers, projection devices, video processors, audio devices, media servers, effects systems, such as fog machines, and the like. In such further aspects, the additional element control signal sent by the transportable node 7 can trigger or cue activity, such as a change in states, in the other device 9. For example, in a representative embodiment, an additional element control signal sent by the transportable node 7 might cause a nearby television or lighting device to be turned on.

It is also contemplated, as shown in FIG. 9, that the transportable nodes can be used to relay element command signals to other nodes, including nodes contained in similar or different devices. Thus, in one aspect, these transportable nodes can be used as primary nodes, much like the fixed nodes. Each transportable node can act as a transceiver of element command signals, thus being capable of receiving and transmitting such signals. Each primary node (whether a fixed node or a transportable node), once stimulated, will transmit the light command signal to other transportable nodes within its transmission range in order to stimulate illumination in those transportable nodes. In FIG. 9, a primary transportable node 77 emits a signal in the range 78 which can be about 5 to 10 meters in distance (although other distances both lesser and greater than this range are contemplated). All the nodes within that range will be trigged in order to illuminate according to the desired light pattern. Such stimulation can be instantaneous or phased dependent upon the light command signal.

FIG. 9 illustrates as circles the transmission ranges which will stimulate the outward wave or ripple effect in the direction of arrow Z. Thus, as illustrated, the first seed transportable node 77 will transmit/relay its element command signal and then transportable nodes 87a and 87b will themselves be stimulated and transmit/relay the element command signal in ranges 88a, 88b, and then a transportable node 97 in the range 88b of node 87b will stimulate and relay the element command signal in range 98. Although arrow Z illustrates the signal being relayed in only one direction, it is to be understood that the element command signal would be relayed radially about a particular seed node.

According to various embodiments, each transportable node can include means for ensuring that once the transportable node is stimulated by a first received element command signal, any other signals will be bounced back or ignored such that the transportable node will be brought into one of its states according to the first received element command signal only.

According to yet other embodiments, a patterning system is provided for creating a pattern in a field, such as a field defined by a venue or other location that includes a plurality of transportable nodes 7 and a controller 1. As best seen in FIG. 6, each of the transportable nodes 7 can comprise a memory 48, such that they are capable of storing pattern data. In these embodiments, the transportable nodes 7 are intended to form a discrete part of a pattern comprised of each of the two or more of the plurality of the transportable nodes. In a representative embodiment, each of the transportable nodes act as a single pixel in an image array comprised of the plurality of transportable nodes. In such an embodiment, the controller 1 is configured to send pixel data to the plurality of transportable nodes 7, which pixel data can be stored in the memory 48 of each respective transportable node 7. The pixel data can include data pertaining to one or more "frames" of the image array. The image array can form a single image, or a plurality of images. The plurality of images can transition slowly from one image to the next, or can transition quickly to have the effect of a video. Each image is considered an individual frame, and the pixel data contains data for each frame or each image that is to be displayed. The length of playback or the number of images that can be displayed by the image array will depend on the memory capacity of the transportable nodes.

In one aspect, the controller 1 comprises a positioning transceiver 12 configured to send signal to the plurality of transportable nodes 7 to determine the relative position of each transportable node 7 at the venue or other location. The positioning transceiver 12 can either send the signal directly to the transceiver of a transportable node (see FIG. 6) or indirectly to the transceiver 34 of a transportable node. The pixel data sent to each transportable node 7 will depend on the relative position of each transportable node 7. In other embodiments, the pixel data sent to each transportable node 7 can depend on a predetermined position of the transportable node. For example, at certain events, such as music concerts or sporting events, users are pre-assigned to a certain seat within the venue. In this particular embodiment, the pixel data sent to the transportable nodes can depend on this pre-assigned or predetermined seat, rather than based on the relative position of the transportable node at any given time. This can be useful for events where users generally remain in an assigned seat, and may only vary their position if using the restroom or visiting a concession stand. It would thus be desirable for the pre-assigned seat to be the location of the transportable node for serving as a pixel in the overall image array, rather than the temporary position of the transportable node at some other point in time. It is contemplated that even if several transportable nodes are out of position or inactive at any point in time, the overall image array would be comprised of a sufficient number of active and properly positioned transportable nodes so as to effectively display the image or images.

The pixel data can be sent to the transportable nodes at a variety of times, taking into account the transmission time that would be needed to send the data to substantially all activated transportable nodes within a given venue. For example, the pixel data can be sent to the transportable nodes prior to the start of a performance, or during a quiet period of performance. In a further embodiment, the controller is configured to send an element command signal to the plurality of transportable nodes to illuminate them according to the pixel data of each transportable node. As such, each transportable node will substantially simultaneously be brought into one of its states according to its stored pixel data to create the overall image or images to be displayed by the image array.

And in one aspect, the transportable nodes 7 can also include memory for storing user data such as the identity of the user and/or payment information for the user. Other user data that can be stored includes, without limitation, the user's name, address, and/or phone number, the user's photograph, the user's gender, age, eating preferences, relationship status, as well as other profile information.

In one aspect of the invention, the profile information is uploaded into the database. For example, at the time of registering the transportable node on the website, the user can input the profile information. The user can purchase credits to be used for payment within a venue, or can upload valid payment information such as debit and/or credit card information, which would be stored as payment information within the memory of the transportable node. The transportable node could then be used within the venue or other location to purchase items such as concessions, souvenirs, or the like, without the need for the user to carry his cash or credit card on his person.

In one aspect of the system shown in FIGS. 2-6, a system for creating a pattern at a location, such as a venue, comprises a plurality of transportable nodes 7 and a controller 1. And in some aspects, each transportable node has a unique identifier. In some aspects, each transportable node 7 comprises an element 47 having at least two states, a transceiver 45 configured to receive a first element command signal to bring one or more of the elements of the one or more activated transportable nodes into one of the its states, means for bringing the element into one of the states in response to the first element command signal, such as the microprocessor 45. In some aspects, the transportable node additionally includes a means for generating a second element command signal. In some embodiments, the means for generating the second element signal microprocessor is the microprocessor 45. And in some aspects, the controller is configured to send the first element command signal to form a pattern at the location from the plurality of transportable nodes, wherein the transceiver is further configured to transmit the second element signal to at least one device controllable by the second element signal, such as at least on of the controllable devices described.

And in one aspect, the element having at least two states is a sensory element. Representative sensory elements include, without limitation a light element, an audio element, a tactile element or combinations thereof.

In one aspect, the transceiver is a radio frequency transceiver. Representative radio frequency transceivers include, without limitation, an ultrasonic wave transceiver, an infrared light transceiver, a visible light transceiver or a wifi transceiver. And in one aspect, the means for bringing the element into one of the states in response to the element command signal is a microprocessor.

In another aspect, wherein the transportable node is further configured to transmit the second element based on the first element signal. And in one aspect, the transportable node is further configured to transmit the second element based on the proximity of the controllable device.

As can be appreciated from the description of the systems above, methods are also provided for creating a pattern at a venue or other location. The method can comprise receiving identifying information from one or more of a plurality of transportable nodes. For example, as described above, a transportable node can have a unique identifier associated with it, which can be received by a transmitter upon a user's arrival at a venue or other location. The method further includes verifying if each of the plurality of transportable nodes is registered for the venue. The method can also include transmitting an element command signal to the registered transportable nodes to create a pattern at the venue.

The method, in one exemplary embodiment, can also include identifying a predetermined location of each transportable node based on the identifying information for each node, and transmitting the element command signal to create the pattern based on the predetermined location of each registered transportable node. For example, as described above, a user can register his transportable node and associate it with a pre-assigned or predetermined seat for the user at the venue. The pattern can then be generated based on this predetermined position, whether or not the transportable node is in that particular position at the time that the element command signal is received.

Optionally, the method can comprise transmitting a position signal to each registered transportable node to determine a relative position of each transportable node within the venue, and transmitting the element command signal to create the pattern based on the position of each registered transportable node. Thus, as described above, fixed nodes can be used to determine the relative positions of the transportable nodes, to create the pattern based on these relative positions.

In yet other embodiments, the methods can comprise transmitting pattern data to each registered transportable node, where each transportable node acts as a discrete element of an image array comprised of the plurality of transportable nodes. The element command signal can trigger each transportable node to be brought into one of their states in response to its respective pattern data to create one or more images formed from the plurality of transportable nodes. As described above, a tactile response mechanism, such as, but not limited to, a vibrating mechanism, can be included as part of the transportable node to alert a user to make the transportable node visible so that it can form part of the overall image.

According to yet other embodiments, transportable nodes can be used for matching users at a venue or other location based on users' profile information. In one aspect, profile information stored in the memory of a transportable node can be uploaded to the data base. In another aspect, at the time of registering the transportable node, a user can complete a profile of a himself, as well as the profile of a desirable partner (whether it be a friend, a future mate, etc.). Profile matches can then be identified between two or more users in close proximity at a venue, in some aspects, in response to MATCH commands sent by the users to the transportable node to controller, In some aspects, the two transportable nodes can illuminate in the same color or with the same pulsating pattern in order that the two users can identify each other. It is preferable that the profile match illumination be different than the lighting of the transportable nodes according to the light pattern at that moment in time, such that the user would readily identify that a profile match has been identified. Optionally, a tactile response mechanism can alert the user that a match has been identified.

As the various transportable nodes described herein can include wireless transmission means (such as a transceiver and antenna), as well as a memory, it is contemplated that the abilities and functionalities of the transportable nodes can be reprogrammed or updated wirelessly. For example, the software of the transportable node can be upgraded wirelessly to allow the transportable node to function in a new or different way.

While the methods and systems have been described in connection with preferred embodiments and specific examples, it is not intended that the scope be limited to the particular embodiments set forth, as the embodiments herein are intended in all respects to be illustrative rather than restrictive.

Unless otherwise expressly stated, it is in no way intended that any method set forth herein be construed as requiring that its steps be performed in a specific order. Accordingly, where a method claim does not actually recite an order to be followed by its steps or it is not otherwise specifically stated in the claims or descriptions that the steps are to be limited to a specific order, it is no way intended that an order be inferred, in any respect. This holds for any possible non-express basis for interpretation, including: matters of logic with respect to arrangement of steps or operational flow; plain meaning derived from grammatical organization or punctuation; the number or type of embodiments described in the specification.

It will be apparent to those skilled in the art that various modifications and variations can be made without departing from the scope.

Other embodiments will be apparent to those skilled in the art from consideration of the specification and practice disclosed herein. It is intended that the specification and examples be considered as exemplary only, with a true scope being indicated by the following claims.

## Claims

1. A system for creating a sensory pattern at a location comprising:
a transmitter, a controller (1), a plurality of transportable nodes (7) each having a unique identifier, and a database configured to store the unique identifiers of the plurality of transportable nodes, each transportable node comprising:
a sensory element having at least two states; and
a transceiver configured to receive a query command signal from the transmitter and an element command signal from the controller, wherein the transportable node is configured to transition the sensory element into one of the at least two states in response to the element command signal; **characterised in that** the transmitter is configured to send the query command signal to one or
more of the transceivers at the location and configured to receive the respective unique identifiers of the plurality of transportable nodes, wherein the transmitter is further configured to validate the unique identifiers against the database, and activate validated ones of the plurality of transportable nodes to receive the element command signal; and
the controller is configured to send the element command signal to the activated transportable node(s) to bring one or more sensory elements of the activated transportable node(s) into one of the at least two states to form a sensory pattern at the location.

2. The system of claim 1, wherein the plurality of transportable nodes includes at least one of wands, badges, sticks, necklaces, wristbands, bracelets, footwear, smart phones, smart watches, or smart glasses.

3. The system of claim 1, wherein each transportable node further comprises an antenna and/or a memory for storing data and/or a tactile response mechanism configured to respond to the element command signal and/or an audio speaker and/or a microphone.

4. The system of claim 3, wherein the data is payment information associated with the user, further wherein the transportable nodes are configured to be used to purchase items within the location by using the payment information.

5. The system of claim 1, wherein at least one of the plurality of transportable nodes is configured to generate a second element command signal and transmit the second element command signal to a device controllable by the second element command signal, wherein the device controllable by the second element command signal is at least one of a television, a video monitor, an audio device, a lighting device, a projection device, a video processor, a media server, or an effects system.

6. The system of claim 1, wherein the transmitter, upon receipt of a unique identifier, is configured to display a picture associated with a registered user of the transportable node associated with the unique identifier for verifying the identity of a holder of a transportable node.

7. The system of claim 3, wherein the data further comprises profile information for a desirable partner, further wherein the transportable nodes are configured to cause their respective elements to change states for generating a match signal when the transportable nodes are within a predetermined distance of other transportable nodes with data matching the profile information.

8. A method for creating a sensory pattern at a location using a plurality of transportable nodes (7), comprising:
receiving, in response to a query command a signal sent at the location, identifying information from one or more of the plurality of transportable nodes, each transportable node having at least two states;
determining, as validation, ones of the plurality of transportable nodes whose received identifying information is registered in a database; and
transmitting a first element command signal to said determined registered transportable nodes to bring one or more sensory elements of the registered transportable nodes into one of the at least two states and to create a sensory pattern at the location.

9. The method of claim 8, further comprising:
receiving profile information from two or more transportable nodes;
matching the transportable nodes based on the profile information; and
transmitting the results of the matching step to the matched transportable nodes.

10. The method of claim 8, further comprising locking out or shutting down ones of the plurality of transportable nodes that, during the determining step, were determined to not be registered in the database.

## Patentansprüche

1. System zum Erzeugen einer sensorischen Struktur an einem Standort, umfassend:
einen Sender, einen Controller (1), eine Vielzahl transportabler Knoten (7), die jeweils eine eindeutige Kennung aufweisen, und eine Datenbank, die dazu ausgelegt ist, die eindeutigen Kennungen der Vielzahl transportabler Knoten zu speichern, wobei jeder transportable Knoten umfasst:
ein sensorisches Element mit wenigstens zwei Zuständen, und
einen Transceiver, der dazu ausgelegt ist, ein Abfragebefehlssignal von dem Sender und ein Elementbefehlssignal von dem Controller zu empfangen, wobei der transportable Knoten dazu ausgelegt ist, das sensorische Element als Reaktion auf das Elementbefehlssignal in einen der wenigstens zwei Zustände zu überführen,
**dadurch gekennzeichnet, dass** der Sender dazu ausgelegt ist, das Abfragebefehlssignal an einen oder mehrere der Transceiver an dem Standort zu senden, und dazu ausgelegt ist, die jeweiligen eindeutigen Kennungen der Vielzahl transportabler Knoten zu empfangen, wobei der Sender ferner dazu ausgelegt ist, die eindeutigen Kennungen anhand der Datenbank zu validieren und die validierten der Vielzahl von transportablen Knoten zum Empfangen des Elementbefehlssignals zu aktivieren, und
der Controller dazu ausgelegt ist, das Elementbefehlssignal an den/die aktivierten transportablen Knoten zu senden, um ein oder mehrere sensorische Elemente des/der aktivierten transportablen Knoten in einen der wenigstens zwei Zustände zu bringen, um eine sensorische Struktur an dem Standort zu bilden.

2. System nach Anspruch 1, wobei die Vielzahl transportabler Knoten wenigstens eines von Folgendem umfasst: Stäbe, Abzeichen, Stöcke, Halsbänder, Armbänder, Armreife, Schuhwerk, Smartphones, Smart Watches oder Smart Glases.

3. System nach Anspruch 1, wobei jeder transportable Knoten ferner umfasst:
eine Antenne und/oder einen Speicher zum Speichern von Daten und/oder einen Mechanismus mit taktiler Rückmeldung, der dazu ausgelegt ist, auf das Elementbefehlssignal zu reagieren, und/oder einen Lautsprecher und/oder ein Mikrofon.

4. System nach Anspruch 3, wobei die Daten mit dem Benutzer assoziierte Zahlungsinformationen sind, wobei die transportablen Knoten ferner dazu ausgelegt sind, zum Kauf von Artikeln innerhalb des Standortes mittels der Zahlungsinformationen benutzt zu werden.

5. System nach Anspruch 1, wobei wenigstens einer der Vielzahl transportabler Knoten dazu ausgelegt ist, ein zweites Elementbefehlssignal zu erzeugen und das zweite Elementbefehlssignal an eine Vorrichtung zu senden, die durch das zweite Elementbefehlssignal steuerbar ist, wobei die durch das zweite Elementbefehlssignal steuerbare Vorrichtung wenigstens eines von Folgendem ist: ein Fernsehgerät, ein Videomonitor, ein Audio-Gerät, eine Beleuchtungsvorrichtung, eine Projektionsvorrichtung, ein Video-Prozessor, ein Medienserver oder ein Effektsystem.

6. System nach Anspruch 1, wobei der Sender dazu ausgelegt ist, bei Empfang einer eindeutigen Kennung ein Bild anzuzeigen, das einem registrierten Benutzer des mit der eindeutigen Kennung assoziierten, transportablen Knotens zugeordnet ist, um die Identität eines Halters eines transportablen Knotens zu verifizieren.

7. System nach Anspruch 3, wobei die Daten ferner Profilinformationen für einen Wunschpartner umfassen, wobei die transportable Knoten dazu ausgelegt sind, ihre jeweiligen Elemente dazu zu veranlassen, ihren Zustand zu ändern, um ein Abstimmungssignal zu erzeugen, wenn sich die transportablen Knoten in einer vorbestimmten Entfernung zu anderen transportablen Knoten mit zu den Profilinformationen passenden Daten befinden.

8. Verfahren zum Erzeugen einer sensorischen Struktur an einem Standort mittels einer Vielzahl transportabler Knoten (7), umfassend:
Empfangen von Identifikationsinformationen von einem oder mehreren der Vielzahl transportabler Knoten als Reaktion auf ein Abfragebefehlssignal, das an dem Standort gesendet wurde, wobei jeder transportable Knoten wenigstens zwei Zustände aufweist;
Ermitteln derjenigen der Vielzahl transportabler Knoten, deren empfangene Identifikationsinformationen in einer Datenbank registriert sind, zur Validation und
Senden eines ersten Elementbefehlssignals an die ermittelten registrierten transportablen Knoten, um ein oder mehrere sensorische Elemente der registrierten transportablen Knoten in einen der wenigstens zwei Zustände zu bringen und eine sensorische Struktur an dem Standort zu erzeugen.

9. Verfahren nach Anspruch 8, das ferner die Schritte umfasst:
Empfangen von Profilinformationen von zwei oder mehr transportablen Knoten;
Abgleichen der transportablen Knoten auf Basis der Profilinformationen, und
Senden der Ergebnisse des Abgleichschrittes an die abgeglichenen transportablen Knoten.

10. Verfahren nach Anspruch 8, ferner umfassend das Ausschließen oder Abschalten derjenigen der Vielzahl transportabler Knoten, die während des Ermittlungsschrittes als nicht in der Datenbank registriert ermittelt wurden.

## Revendications

1. Système pour créer un motif sensoriel dans un lieu, comprenant:
un émetteur, un contrôleur(1), plusieurs noeuds transportables (7) possédant chacun un identifiant unique, et une base de données configurée pour stocker les identifiants uniques des plusieurs noeuds transportables, chaque noeud transportable comprenant:
un élément sensoriel ayant au moins deux états; et
un émetteur-récepteur configuré pour recevoir un signal de commande d'interrogation de l'émetteur et un signal de commande d'élément du contrôleur, le noeud transportable étant configuré pour faire passer l'élément sensoriel dans un des au moins deux états en réponse au signal de commande d'élément,
**caractérisé en ce que** l'émetteur est configuré pour transmettre le signal de commande d'interrogation à un ou plusieurs des émetteurs-récepteurs dans le lieu et configuré pour recevoir les identifiants uniques correspondants des plusieurs noeuds transportables, l'émetteur étant en outre configuré pour valider les identifiants uniques par rapport à la base de données et activer ceux des plusieurs noeuds transportables qui sont validés afin de recevoir le signal de commande d'élément, et
le contrôleur est configuré pour émettre le signal de commande d'élément vers le ou les noeuds transportables activés afin d'amener un ou plusieurs éléments sensoriels du ou des noeuds transportables activés dans un des au moins deux états afin de former un schéma sensoriel dans le lieu.

2. Système selon la revendication 1, dans lequel les plusieurs noeuds transportables comprennent au moins soit des baguettes, soit des badges, des stylos, des colliers, de bracelets, des chaussures, des smartphones, des montres intelligentes ou des lunettes intelligentes.

3. Système selon la revendication 1, dans lequel chaque noeud transportable comprend en outre une antenne et une mémoire pour stocker des données et/ou un mécanisme de réponse tactile configuré pour répondre au signal de commande d'élément et/ou un haut-parleur audio et/ou un microphone.

4. Système selon la revendication 3, dans lequel les données sont des informations de paiement associées à l'utilisateur, dans lequel les noeuds transportables sont en outre configurés pour être utilisés afin d'acheter des objets dans le lieu en utilisant les informations de paiement.

5. Système selon la revendication 1, dans lequel au moins un des plusieurs n oeuds transportables est configuré pour générer un deuxième signal de commande d'élément et transmettre le deuxième signal de commande d'élément à un appareil qui peut être commandé par le deuxième signal de commande d'élément, l'appareil qui peut être commandé par le deuxième signal de commande d'élément étant au moins soit un téléviseur, soit un moniteur vidéo, un appareil audio, un appareil d'éclairage, un appareil de projection, un processeur vidéo, un serveur multimédia ou un système d'effets.

6. Système selon la revendication 1, dans lequel l'émetteur, ayant reçu un identifiant unique, est configuré pour afficher une image associée à un utilisateur enregistré du noeud transportable associé à l'identifiant unique afin de vérifier l'identité d'un porteur du noeud transportable.

7. Système selon la revendication 3, dans lequel les données comprennent en outre des informations de profil sur un partenaire souhaitable, dans lequel les noeuds transportables sont en outre configurés pour provoquer un changement d'état de leurs éléments afin de générer un signal de correspondance quand les noeuds transportables se trouvent à une distance prédéterminée d'autres noeuds transportables dont les données correspondent aux informations de profil.

8. Procédé pour créer un motif sensoriel dans un lieu à l'aide de plusieurs noeuds transportables (7), comprenant:
la réception, en réponse à un signal de commande d'interrogation envoyé dans le lieu, d'informations d'identification d'un ou plusieurs des plusieurs noeuds transportables, chaque noeud transportable ayant au moins deux états ;
la détermination, comme validation, de ceux des noeuds transportables dont les informations d'identification reçues sont enregistrées dans une base de données et
l'émission d'un premier signal de commande d'élément vers lesdits noeuds transportables enregistrés afin d'amener un ou plusieurs éléments sensoriels des noeuds transportables enregistrés dans un des au moins deux états et de créer un schéma sensoriel dans le lieu.

9. Procédé selon la revendication 8, comprenant en outre:
la réception d'informations de profil de deux ou plusieurs noeuds transportables,
la mise en correspondance des noeuds transportables sur la base des informations de profil et
la transmission des résultats de l'étape de mise en correspondance aux noeuds transportables qui se correspondent.

10. Procédé selon la revendication 8, comprenant en outre l'exclusion ou la désactivation des noeuds transportables dont il est déterminé, au cours de l'étape de détermination, qu'ils ne sont pas enregistrés dans la base de données.
